# EUROPÄISCHE PATENTSCHRIFT

(11) **EP 3 530 506 B1**
(45) Veröffentlichungstag und Bekanntmachung des Hinweises auf die Patenterteilung: **09.09.2020**
(21) Anmeldenummer: 18212509.6
(22) Anmeldetag: 14.12.2018
(51) Int. Cl.: B60H 1/34, F24F 13/14

(54) **LUFTAUSSTRÖMER**
AIR VENT
DISPOSITIF D'ÉCOULEMENT D'AIR

(30) Priorität: 07.02.2018 DE 102018102761; 26.04.2018 DE 102018110080
(43) Veröffentlichungstag der Anmeldung: 28.08.2019
(73) Patentinhaber: Dr. Schneider Kunststoffwerke GmbH, 96317 Kronach-Neuses (DE)
(72) Erfinder: Shaik, Shabbeer, 95448 Kronach (DE); Schwarz, Josef, 96317 Kronach (DE)

(56) Entgegenhaltungen:
- DE-A1- 4 136 822
- DE-A1-102017 111 011
- FR-A1- 3 043 449
- US-A1- 2013 029 582

## Beschreibung

Es wird ein Luftausströmer beschrieben, aufweisend ein Gehäuse mit einem der Mantelfläche eines Zylinders entsprechenden Abschnitt, der eine Lufteintrittsöffnung und eine Luftaustrittsöffnung aufweist, ein im Gehäuse drehbar gelagertes Luftleitelement, eine erste Gruppe von Lamellen und eine zweite Gruppe von Lamellen.

Luftausströmer dienen zum Ausgeben von Luft, die von einer Klimaanlage oder einer anderen Belüftungseinrichtung zugeführt wird. Zusätzlich kann über Luftausströmer eine Ablenkung der ausgegebenen Luft erreicht werden. In Fahrzeugen werden Luftausströmer eingesetzt, um Frischluft, temperierte Luft und/oder klimatisierte Luft in den Fahrgastraum eines Fahrzeugs zu bringen. Fahrzeuge können beispielsweise Kraftfahrzeuge wie Pkw, Lkw oder Busse, Züge, Flugzeuge oder Schiffe sein. Bei Luftausströmern kann oftmals neben der Steuerung der Ablenkung von ausgegebener Luft auch die Menge an ausgegebener Luft geregelt werden. Hierzu wird die Menge der in den Luftausströmer geleiteten Luft über eine Steuereinrichtung geregelt, die mit einer Bedieneinrichtung zum Ablenken des Luftstroms oder getrennt von einer solchen Bedieneinrichtung angeordnet ist. Eine solche Bedieneinrichtung kann beispielsweise im Bereich einer Ausströmöffnung vorgesehen sein. Luftausströmer können in einem Fahrzeugarmaturenbrett oder im Bereich der A-, B- oder C-Säule oder am Dach sowie an weiteren Stellen eines Kraftfahrzeugs angeordnet sein.

### Stand der Technik

Konventionelle Luftausströmer mit einer sehr geringen Ausströmhöhe gegenüber ihrer Ausströmbreite (und umgekehrt) weisen beispielsweise Ei-förmige Luftleitelemente auf, die in einem Luftkanalabschnitt gelagert sind, wobei zwischen dem Luftleitelement und den gegenüberliegenden Wandabschnitten Luftkanäle ausbildet sind. Diesen Luftkanälen kann wechselweise oder gemeinsam Luft zugeführt werden, wobei das Zuführen von Luft in einen der Bereiche aufgrund der Krümmung und Ausgestaltung des Gehäuses sowie des Luftleitelementes eine Luftablenkung bewirkt.

Um eine zusätzliche seitliche Luftablenkung zu erreichen, sind dem Luftleitelement in Luftströmungsrichtung vorgelagerte Lamellen vorgesehen. Ein derartiger Luftausströmer ist beispielsweise in DE 10 2013 210 055 B3 beschrieben.

Ein solcher Luftausströmer weist jedoch verschiedene Nachteile auf. Zum einen ist die seitliche Luftablenkung über die in Luftströmungsrichtung vorgelagerten Lamellen unzureichend. Die ausgegebene Luft kann über die Lamellen nur in einem sehr beschränkten Umfang seitlich abgelenkt werden. Zudem benötigt der Luftausströmer einen relativ großen Bauraum. Der Bauraum ergibt sich zum einen aus den in Luftströmungsrichtung vorgelagerten Lamellen und zum anderen durch eine zusätzliche Schließklappe als Drosseleinrichtung, welche den Lamellen ebenfalls in Strömungsrichtung vorgelagert ist. Daher ist zusätzlicher Bauraum im Bereich eines Luftkanals, in dem die Drosseleinrichtung und die Lamellen angeordnet sind, erforderlich. Der Luftausströmer von DE 10 2013 210 055 B3 weist zusätzlich einen rückseitigen, der Lufteintrittsöffnung zugewandten Flügel auf, der schwenkbeweglich am Luftleitelement angeordnet und über eine Bedieneinrichtung verschwenkbar ist. Die Hebelanordnung zum Verschwenken des Flügels benötigt ebenfalls Bauraum. Das Luftleitelement muss daher eine gewisse Mindesthöhe aufweisen. Diese Mindesthöhe erfordert daher auch eine Mindesthöhe des Gehäuses des Luftausströmers, damit ein ausreichend großer Luftstrom zwischen dem Luftleitelement und den gegenüberliegenden Gehäusewänden möglich ist.

Darüber hinaus weist der Luftausströmer von DE 10 2013 210 055 B3 eine Vielzahl von Komponenten auf, die über komplexe Kinematiken miteinander gekoppelt sind. Der Luftausströmer ist daher sowohl aufwendig und kostenintensiv, als auch störungsanfällig. Dabei ist die Luftablenkung orthogonal zur Luftablenkung über das Luftleitelement nur in eingeschränkter Weise möglich.

FR 3 043 449 A1 offenbart einen Luftausströmer, bestehend aus einem Gehäuse, in dem ein Luftleitelement schwenkbeweglich gelagert ist. Am Luftleitelement angeformte Schalen sind der Form des Gehäuses nachempfunden und gleiten beim Verschwenken des Luftleitelements im Wesentlichen über dessen Innenfläche. Die Lagerung des Luftleitelement erfolgt über einen Steg, der am Gehäuse angeformt und dem Luftleitelement in Luftströmungsrichtung vorgelagert ist. In dem Luftleitelement sind wiederum verschwenkbare Lamellen angeordnet. Durch Verschwenken des Luftleitelements erfolgt über die Lamellen und die Schalen eine Ablenkung des Luftstroms.

US 2013 0 029 582 A1 und DE 41 36 822 A1 offenbaren jeweils einen Luftausströmer mit einem zylindrischen Luftleitkörper, der an der Luftauslassöffnung in einem Gehäuse drehbar gelagert ist. Die Gehäusewände sind in diesem Bereich ebenfalls zylindrisch ausgestaltet und umfassen den zylindrischen Luftleitkörper. In dem Luftleitkörper sind Lamellen parallel zu dessen Mittelachse angeformt und luftauslassseitig angeordnet; die beiden äußeren Lamellen sind Bestandteil der Mantelwand des zylindrischen Luftleitkörpers. Beim Verdrehen des Luftleitkörpers innerhalb des zylindrisch geformten Gehäuseteils lässt so sich der ausströmende Luftstrom in seiner Richtung verstellen. Die maximale Neigung des zylindrischen Luftleitkörpers ist erreicht, sobald eine der beiden äußeren Lamellen das zuluftseitige Ende der zylindrischen Gehäusewölbung erreicht. DE 41 36 822 A1 verfügt darüber hinaus über eine am Luftauslass angeordnete feststehende Blende mit Stegen, welche schlitzartige Luftausströmöffnungen bilden, die mit den Lamellen des zylindrischen Luftleitkörpers korrespondieren. DE 10 2017 111 011 A1 zeigt einen Luftausströmer mit einem Gehäuse, das zylindrisch ausgeformte Wände im Bereich des Luftauslasses aufweist. Innerhalb des zylindrischen Gehäusebereichs befindet sich ein Luftleitelement mit zu den zylindrischen Wänden gleichartig gekrümmten Oberflächen. Durch das Luftleitelement wird der Luftkanal aufgeteilt in einen oberen und einen unteren Luftkanal. In diesen beiden Luftkanälen sind quer zur Mittelachse des zylindrischen Gehäusebereichs Lamellen angeordnet. Zuluftseitig befinden sich gegenüberliegend an den Gehäusewänden vor dem zylindrischen Gehäusebereich zwei Klappen, welche ihre Drehachsen an der Gehäusewand haben und sich in einer Nichtgebrauchsstellung im Wesentlichen die Gehäusewand anschmiegen. Der in den Luftausströmer eintretende Luftstrom umströmt dann das Luftleitelement beidseitig. Die Luftablenkung erfolgt, indem jeweils eine Klappe in den Luftstrom verschwenkt und dadurch teilweise bis vollständig jeweils einer der beiden Kanäle verschlossen wird. Der Luftstrom umströmt sodann das Luftleitelement im noch geöffneten anderen Luftkanal und tritt durch die zylindrisch ausgestaltete Gehäusewand schräg gerichtet aus.

### Aufgabe

Demgegenüber besteht die Aufgabe der Erfindung darin, einen Luftausströmer anzugeben, der einen sehr einfachen Aufbau aufweist, wobei der Luftausströmer nur einen geringen Bauraum benötigt und auch eine hohe Luftablenkung seitlich zu einer Luftablenkung über ein zentrales Luftleitelement bereitstellt. Zudem soll eine alternative Lösung zu den aus dem Stand der Technik bekannten Luftausströmern angegeben werden.

### Lösung

Die vorstehend genannte Aufgabe wird erfindungsgemäß durch einen Luftausströmer gemäß dem unabhängigen Anspruchs 1 gelöst. Vorteilhafte Ausgestaltungen der Erfindung ergeben sich aus den Unteransprüchen.

Die Schalen sind direkt mit dem Luftleitelement verbunden, sodass ein Verschwenken des Luftleitelementes automatisch auch ein Verschwenken der Schalen bewirkt. Wird das Luftleitelement ausgehend von einer Neutralstellung verschwenkt, gelangt entweder eine obere oder eine untere bzw. eine linke oder rechte Schale in einen Bereich der Lufteintrittsöffnung, sodass die Luftzufuhr in einen der beiden Luftkanäle, die zwischen dem Luftleitelement und dem gegenüberliegenden Wandabschnitten gebildet werden, reduziert wird. In einer maximal verschwenkten Stellung des Luftleitelementes liegt eine der beiden Schalen an dem Steg an, sodass der Luftstrom in diesem Teilbereich bzw. Teilluftkanal gesperrt ist.

Die Lamellen sind zudem direkt verschwenkbar am Luftleitelement gelagert, sodass ein Verdrehen des Luftleitelementes ein entsprechendes Mitverdrehen der Lamellen bewirkt. Wird das Luftleitelement verschwenkt, so gelangen diejenigen Lamellen weiter in Richtung der Luftaustrittsöffnung, welche an dem Abschnitt des Luftleitelementes angeordnet sind, über den der maximale oder größere Luftstrom entlanggeführt wird.

Die Ausbildung des Luftausströmers stellt einen ersten Teilluftkanal und einen zweiten Teilluftkanal bereit, die zwischen dem Luftleitelement und dem sich ausgehend vom Luftleitelement nach hinten erstreckenden Steg sowie den gegenüberliegenden Wandabschnitten gebildet sind.

Die Anordnung der Lamellen am Luftleitelement verbessert zudem die seitliche Luftablenkung. Die seitliche Luftablenkung wird in einem vorderen, der Luftaustrittsöffnung zugewandten Bereich ausgeführt, sodass die Ablenkung deutlich gegenüber Ausführungen aus dem Stand der Technik verbessert ist, bei welchen Lamellen einem Luftleitelement in Strömungsrichtung vorgelagert angeordnet sind.

Die Luftablenkung über das Luftleitelement erfolgt durch ein Verschwenken des Luftleitelementes, wobei über die Schalen die Öffnungsweite der Lufteintrittsöffnung in den jeweiligen Teilluftkanälen verändert wird. Dementsprechend gelangt mehr oder weniger Luft in die Teilluftkanäle, sodass die in dem Teilluftkanal entlangströmende Luft, welche einen größeren Anteil aufweist, maßgeblich für die Luftablenkung ist. Die Luft strömt entlang der gekrümmten Ausführungen des Abschnitts des Gehäuses entlang und folgt dessen Krümmung. Befindet sich das Luftleitelement in einer Neutralstellung, so sind beide Teilluftströme gleich groß und heben sich insoweit auf, dass ein geradliniger Luftstrom ausgegeben wird. Ist jedoch einer dieser Luftströme größer, so erfolgt die Luftablenkung in Abhängigkeit des größeren Luftstroms, wobei sich die Ablenkung nach Maßgabe der Volumenstromverhältnisse der beiden Teilluftströme einstellt.

Das Luftleitelement und die Schalen sind miteinander verbunden und um eine gemeinsame Drehachse verschwenkbar im Gehäuse bzw. in dem der Mantelfläche eines Zylinders entsprechenden Abschnitt gelagert. Die Schalen und das Luftleitelement können an ihren Endabschnitten über Kreissektoren oder Scheiben bzw. Arme miteinander verbunden sein.

Der Steg kann die Lufteintrittsöffnung im Wesentlichen mittig teilen. Hierzu ist der Steg mittig angeordnet und unterteilt die Lufteintrittsöffnung in zwei große Teilöffnungen von denen aus sich die Teilluftkanäle erstrecken.

Der Abstand der Schalen zueinander kann gleich oder geringfügig größer sein als der Öffnungsquerschnitt der Lufteintrittsöffnung. Zudem oder alternativ kann die Bogenlänge der Schalen mindestens so groß sein, wie der halbe Öffnungsquerschnitt der Lufteintrittsöffnung. Der Abstand der Schalen zueinander stellt sicher, dass in einer Neutralstellung beide Teilluftkanäle maximal mit Luft versorgt werden können. Die Bogenlänge der Schalen muss entsprechend so gewählt sein, dass diese die Teilluftkanäle vollständig verschließen können, wobei die Schalen dann an dem Steg anliegen. Die Bogenlänge der Schalen ist so gewählt, dass diese mindestens so groß ist, wie der halbe Öffnungsquerschnitt der Lufteintrittsöffnung, damit das vollständige Verschließen der Teilluftkanäle möglich ist. Vorzugsweise ist die Bogenlänge größer gewählt, sodass in sämtlichen Stellungen des Luftleitelementes und der Schalen beide Schalen in Kontakt mit der Wand des Abschnitts des Gehäuses sind. Die Schalen dienen dabei auch als Führung und unterstützen die Lagerung des Luftleitelementes.

Die Schalen sind in weiteren Ausführungen so ausgebildet, dass diese nicht in die Luftaustrittsöffnung ragen, unabhängig davon, in wie weit das Luftleitelement verschwenkt ist.

Das Luftleitelement kann keulenförmig oder walzenförmig ausgebildet sein.

Das Luftleitelement kann einen über die Luftaustrittsöffnung zugänglichen Griff aufweisen. Über den Griff kann das Luftleitelement ergriffen und verschwenkt werden. Über den Griff wird dabei gleichzeitig die Stellung der Schalen durch das Verschwenken des Luftleitelementes verändert und damit die Menge an zugeführter Luft in die entsprechenden Teilluftkanäle geregelt. Die Menge an zugeführter Luft in die Teilluftkanäle bzw. das Verhältnis der in den Teilluftkanälen zugeführten Luft bestimmt dabei die Luftablenkung.

Zusätzlich dazu kann am Griff ein Bedienelement angeordnet sein, welches mit den Lamellen der ersten Gruppe von Lamellen und den Lamellen der zweiten Gruppe von Lamellen zum Verschwenken gekoppelt ist. Das Luftleitelement ist vorzugsweise hohl ausgebildet, sodass im Inneren die Komponenten zum Verschwenken der Lamellen aufgenommen werden können. Das Bedienelement kann beispielsweise verschiebbar an dem Grill angeordnet sein. Ein Verschieben des Bedienelementes kann über Koppelelemente, Hebelanordnungen etc. ein entsprechendes Verschwenken sämtlicher Lamellen bewirken. Da lediglich eine seitliche Verlagerung in der Hauptebene des Griffs erforderlich ist, ist der Platzbedarf gegenüber bekannten Ausführungen trotz der im Inneren des Luftleitelements angeordneten Elemente gering.

Die ersten Gruppe von Lamellen und die zweite Gruppe von Lamellen können dabei über gemeinsame Lagerwellen miteinander verbunden sein. Ein Paar gegenüberliegender Lamellen der ersten Gruppe von Lamellen und der zweiten Gruppe von Lamellen sind daher direkt miteinander verbunden. Zusätzlich oder alternativ dazu können Koppelzapfen an beiden Lamellen oder an einer der Lamellen vorgesehen sein, wobei ein Verschwenken der Koppelzapfen ein entsprechendes Verschwenken der Lamellen bewirkt. In weiteren Ausführungsformen kann direkt auf die Lagerwelle eingewirkt werden, wobei ein Verdrehen der Lagerwelle automatisch ein Verschwenken der Lamellen hervorruft. In alternativen Ausführungen sind die Lamellen über die Lagerwellen lediglich drehbar gelagert und das Verschwenken erfolgt über die vorstehend genannten Koppelzapfen, auf welche die Verstellmittel wirken. Über die Koppelzapfen können auch mehrere Lamellen miteinander gekoppelt sein, sodass das Verschwenken einer Lamelle automatisch ein synchrones Verschwenken der anderen Lamellen bewirkt. Die Ausführung solcher Übertragungsmechaniken ist aus dem Stand der Technik in verschiedenen Ausführungen bekannt und kann hierfür verwendet werden.

Der Griff kann sich über die Länge des Luftleitelementes hinweg erstrecken und als Luftleitfläche ausgebildet sein. Das Luftleitelement weist dann einen beispielsweise walzenförmigen bzw. zylinderförmigen Abschnitt mit einem größeren Durchmesser auf, der drehbar gelagert ist. Von diesem aus erstreckt sich der Griff bzw. die Luftleitfläche, die in den maximal verschwenkten Stellungen ein zusätzliches Verschließen der Teilluftkanäle bewirkt. Zudem kann ausströmende Luft entlang der Luftleitfläche des Griffs entlang strömen, sodass die Luftablenkung weiter verbessert wird.

Die Luftablenkung erfolgt überwiegend aufgrund der gekrümmten Ausbildung des Abschnitts des Gehäuses, sodass eine intuitive Bedienung bereitgestellt wird. Ein Verschwenken des Luftleitelementes nach unten bewirkt in entsprechender Weise eine Luftablenkung nach unten, da durch das Verdrehen des Luftleitelementes nach unten die entsprechende Schale den unteren Teilluftkanal verschließt. Einströmende Luft gelangt daher nur in den oberen Teilluftkanal und wird durch die Krümmung des Abschnitts des Gehäuses nach unten gerichtet.

Im Bereich der Lufteintrittsöffnung des Gehäuses oder in einem der Lufteintrittsöffnung in Luftströmungsrichtung vorgelagerten Kanal kann eine Drosseleinrichtung angeordnet sein, mittels welcher die Menge an zugeführter Luft regelbar ist. Drosseleinrichtungen dienen dazu, die Menge an zugeführter Luft zu steuern. Sie sind nicht dafür vorgesehen, zu regeln, in wie weit in die Teilluftkanäle eine Luftaufteilung bzw. Verteilung erfolgt. Daher ist eine Drosseleinrichtung zusätzlich zu den Schalen erforderlich, um die gesamte Menge an zugeführter Luft zu regeln. Die Schalen selbst regeln das Verhältnis der in die jeweiligen Teilluftkanäle zugeführten Luft.

Die Drosseleinrichtung kann zwei verschwenkbare Drosselklappen aufweisen, die zum Verschließen der Lufteintrittsöffnung bis in Berührungsanlage gegeneinander bewegbar und die zum Öffnen der Lufteintrittsöffnung voneinander weg bewegbar sind. Die Drosselklappen können über weitere Mittel gekoppelt sein, sodass ein Verschwenken einer Drosselklappe ein automatisches Verschwenken der anderen Drosselklappe ausführt. Dies kann beispielsweise über eine Zwangskopplung erfolgen. Die Ansteuerung der Drosselklappen kann über ein Bedienrad erfolgen, das im Bereich der Luftaustrittsöffnung an einer Blende des Luftausströmers angeordnet ist. Ein Verdrehen des Bedienrads bewirkt ein aufeinander zu oder voneinander weg bewegen der Drosselklappen. Die Drosselklappen verkleinern den

Öffnungsquerschnitt des Lufteinlasses, wobei über die Drosselklappen selbst keine Luftablenkung oder Luftzufuhr in einen der Teilluftkanäle erfolgt. Vorteilhafterweise kann daher die Menge an zugeführter Luft geregelt werden, ohne eine Luftablenkung zu bewirken. Zudem erfolgt die Drosselung der Luftzufuhr derart, dass die Luft stets in die Mitte des Luftausströmers geleitet wird.

In weiteren Ausführungsformen können die Schalen an den gegenüberliegenden Längskanten jeweils schwenkbeweglich mit einer Klappe verbunden und die Klappen über eine drehbar gelagerte Hebelanordnung am Gehäuse gelagert sein. Die Klappen können beispielsweise gekrümmt sein, sodass diese einen strömungsgünstigen Verlauf aufweisen. Eine solche Ausführung verhindert, dass einströmende Luft gegen die Schalen prallt. Es wird vielmehr eine verbesserte Luftablenkung zu den jeweiligen Teilluftkanälen erreicht.

Das Gehäuse kann dabei im Bereich der Klappen einen an die Lufteintrittsöffnung sich anschließenden ersten Kanalabschnitt aufweisen, der Aufnahmen für die Klappen ausbildet, wobei sich in Luftströmungsrichtung vorgelagert ein zweiter Kanalabschnitt anschließt, dessen Öffnungsquerschnitt kleiner ist als der Öffnungsquerschnitt im ersten Kanalabschnitt. Die Klappen sind daher in einer Neutralstellung im Wesentlichen so weit voneinander beabstandet, wie die gegenüberliegenden Wandabschnitte des zweiten Kanalabschnitts, sodass der Öffnungsquerschnitt im zweiten Kanalabschnitt im Wesentlichen dem Öffnungsquerschnitt zwischen den Klappen entspricht. Die Aufnahmen dienen zum Ausgleich beim Verschwenken der Klappen.

Bei einer solchen Ausführung kann im zweiten Kanalabschnitt zusätzlich eine Drosseleinrichtung vorgesehen sein, die beispielsweise als verschwenkbare Schließklappe ausgebildet ist. Es können jedoch auch andere Drosseleinrichtungen vorgesehen sein.

Der erfindungsgemäβe Luftausströmer weist wenig Bestanteile auf und umfasst keine komplexen kinematischen Bauteile oder Anordnungen. Daher ist der Luftausströmer störungsunanfällig und kann in hoher Stückzahl kostengünstig gefertigt werden. Zudem können die Komponenten des Luftausströmers in einem Spritzgussprozess in hoher Stückzahl gefertigt werden. Auch dies wirkt sich positiv auf die Kosten aus. Als Material können recycelbare Stoffe verwendet werden.

Zudem können Beleuchtungselemente (z.B. LED) vorgesehen sein, die direkt Komponenten des Luftausströmers beleuchten oder über Lichtleiter beleuchtbare Bereiche illuminieren. Hierzu können beispielsweise Komponenten des Luftausströmers aus einem durchbeleuchtbaren Material bestehen und mit einer Beschichtung versehen sein, die partielle Freiräume lässt, sodass Licht hierüber austreten kann. Beispielsweise kann der Steg aus einem durchleuchtbaren Kunststoff bestehen, wobei seitlich Licht in diesen eingebracht wird. Da der Steg hinter dem Luftleitelement angeordnet ist, ist dieser von außen nicht sichtbar. Eine Beleuchtung des Steges ermöglicht eine Beleuchtung des Abschnitts, in dem das Luftleitelement gelagert ist, sodass eine homogene Illuminierung des Innenraums des Luftkanals bzw. des zylinderförmigen Abschnitts bereitgestellt wird. Eine zusätzliche Beschichtung des Steges ist nicht erforderlich.

Der Steg selbst ist direkt am Gehäuse gelagert und nicht verschwenkbar angeordnet. Der Steg kann dabei als Teil des Gehäuses mit dem Gehäuse ausgebildet werden.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine schematische Darstellung eines Luftausströmers in einer Neutralstellung;
- Fig. 2: eine schematische Darstellung eines Luftausströmers mit verschwenktem Luftleitelement und verschwenkten Schalen;
- Fig. 3: eine schematische Darstellung eines Luftausströmers einer weiteren Ausführungsform mit einer Klappenanordnung zur Luftablenkung in einer Neutralstellung;
- Fig. 4: eine schematische Darstellung des Luftausströmers von Fig. 3 in einer ersten Maximalstellung; und
- Fig. 5: eine schematische Darstellung des Luftausströmers von Fig. 3 in einer zweiten Maximalstellung.

In den Zeichnungen mit gleichen Bezugszeichen versehene Komponenten entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hierin offenbarten technischen Lehre sind.

### Ausführliche Beschreibung von Ausführungsbespielen

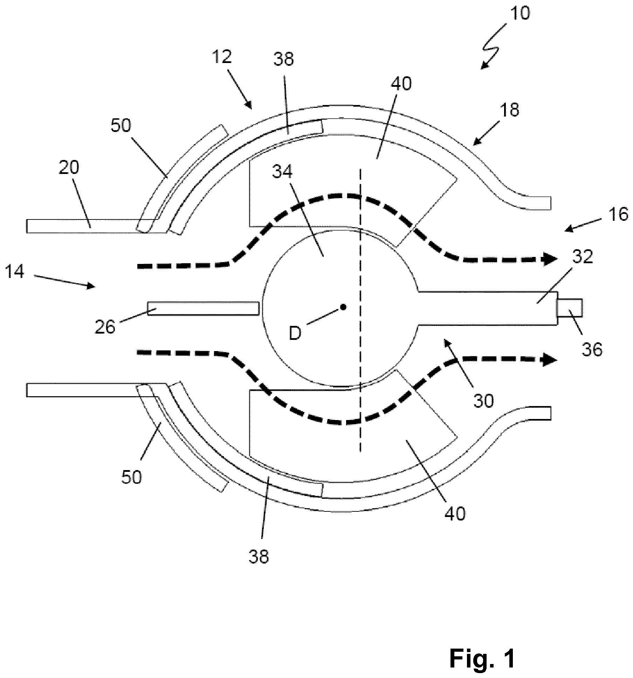

Fig. 1 zeigt eine schematische Darstellung eines Luftausströmers 10 in einer Neutralstellung. Der Luftausströmer 10 ist als Fugenausströmer ausgebildet und weist dabei eine größere Breite als Höhe auf. Anstelle einer Anordnung, wobei sich der Luftausströmer 10 über die Breite hinweg erstreckt, kann dieser auch um 90° verdreht oder in Schrägstellungen angeordnet sein. Wesentlich bei Fugenausströmern ist jedoch, dass die Luftaustrittsbreite deutlich größer ist als die Höhe. Der Luftausströmer 10 kann beispielsweise in einem Fahrzeugarmaturenbrett angeordnet sein. Weitere Stellen, an welchen solche Luftausströmer vorgesehen sein können, sind die A-, B-, C-Säule oder eine in den Fond eines Fahrzeugs gerichtete Mittelkonsole.

Die Komponenten des Luftausströmers 10 bestehen aus einem Kunststoff und können daher in einem Spritzgussprozess in hoher Stückzahl kostengünstig hergestellt werden. Die Komponenten können zusätzlich eine Beschichtung aufweisen, um eine bestimmte Oberflächenbeschaffenheit und -struktur aufzuweisen. Eine solche Oberflächenbeschaffenheit kann auch in einem Spritzgussprozess erzeugt werden.

Der Luftausströmer 10 weist ein Gehäuse 12 mit einem im Wesentlichen zylinderförmigen Abschnitt 18 auf. Der Abschnitt 18 weist eine Lufteintrittsöffnung 14 und eine Luftaustrittsöffnung 16 auf. Die Lufteintrittsöffnung 14 befindet sich in einem Übergang von dem Abschnitt 18 zu einem Luftkanal 20. Über den Luftkanal 20 ist der Luftausströmer 10 mit einer Belüftungseinrichtung wie einer Klimaanlage verbunden. An der Außenseite des Abschnitts 18 ist eine Drosseleinrichtung vorgesehen, die zwei Drosselklappen 50 aufweist. Die Drosselklappen 50 sind so miteinander gekoppelt, dass diese stets gemeinsam verschwenkt werden. Die Drosselklappen 50 können aufeinander zu und voneinander weg bewegt werden, wobei zur Drosselung der Menge an zugeführter Luft keine Luftablenkung erfolgt, da lediglich die Öffnungsweite reduziert wird. Einströmende Luft gelangt daher immer im Wesentlichen in den mittleren Bereich des Abschnitts 18.

In dem Abschnitt 18, der der Mantelfläche eines Zylinders entspricht, ist ein Luftleitelement 30 drehbar um die Drehachse D gelagert. Die Drehachse D und die Mittelachse des Abschnitts 18 verlaufen koaxial zueinander. Das Luftleitelement 30 weist einen walzenförmigen Abschnitt 34 und einen sich daran nach vorne anschließenden Griff 32 auf. Am vorderen Ende des Griffs 32, welches der Luftaustrittsöffnung 16 zugewandt ist, ist ein verschiebbar gelagertes Bedienelement 36 angeordnet. Das Bedienelement 36 ist über nicht dargestellte Elemente mit Lamellen 40 gekoppelt, die am Luftleitelement 30 bzw. dem walzenförmigen Abschnitt 34 verschwenkbar gelagert sind. Die Lamellen 40 sind um eine in Fig. 1 gestrichelt dargestellte Achse drehbar am Abschnitt 34 gelagert. Wird das Luftleitelement 30 verschwenkt, so werden ebenso die Lamellen 40 mit verschwenkt. Die Lamellen 40 einer ersten Gruppe von Lamellen und die Lamellen 40 einer zweiten Gruppe von Lamellen befinden sich gegenüberliegend am walzenförmigen Abschnitt 34 und dienen zur seitlichen Luftablenkung. Die Lamellen 40 können über eine gemeinsame Drehachse miteinander verbunden und über diese am walzenförmigen Abschnitt 34 gelagert sein. Der walzenförmige Abschnitt 34 weist hierzu gegenüberliegenden Öffnungen auf, durch welche die Achse geführt ist. Das Bedienelement 36 kann direkt auf die Achse einwirken, sodass ein Verdrehen der Achse erfolgt. Die Lamellen 40 der ersten Gruppe von Lamellen und die Lamellen 40 der zweiten Gruppe von Lamellen können dann zusätzlich über weitere Koppeleinrichtungen gekoppelt sein, sodass das Verdrehen eines Paares gegenüberliegender Lamellen 40 automatisch ein synchrones Verschwenken der anderen Paare von gegenüberliegenden Lamellen 40 bewirkt.

In weiteren nicht dargestellten Ausführungsformen können die Lamellen 40 auch einen zusätzlichen Koppelzapfen aufweisen, über den die Lamellen der ersten Gruppe von Lamellen und/oder die Lamellen der zweiten Gruppe von Lamellen 40 miteinander über eine Koppelstange gekoppelt sind. Zusätzlich kann das Bedienelement 36 auf mindestens einen der Koppelzapfen einwirken und dabei ein Verschwenken sämtlicher Lamellen 40 bewirken. Der walzenförmige Abschnitt 34 kann zusätzlich eine bogenförmige Führungskulisse aufweisen, in welcher der Koppelzapfen geführt ist. Innerhalb des walzenförmigen Abschnitts 34 ist dieser Koppelzapfen dann mit dem Bedienelement 36 zum Verschwenken der Lamellen 40 gekoppelt.

Das Luftleitelement 30 ist ferner fest mit Schalen 38 verbunden, die eine konkave Form aufweisen und entsprechend zum Abschnitt 18 gekrümmt ausgebildet sind. Die Schalen 38 weisen an den gegenüberliegenden Kanten einen Abstand auf, der mindestens so groß ist, wie die Öffnungsweite der Lufteintrittsöffnung 14. In einer Neutralstellung wird dadurch sichergestellt, dass keine Absperrung einer der beiden Teilluftkanäle, die zwischen dem Luftleitelement 30 und den gegenüberliegenden Wandabschnitten des Abschnitts 18 gebildet sind, auftritt. Die Bogenlänge der Schalen 38 ist größer als die halbe Öffnungsweite der Lufteintrittsöffnung 14, sodass auch in einer vollständig verschwenkten Stellung des Luftleitelementes 30 zumindest ein Teil der Schalen 38 an einem Wandabschnitt des Abschnitts 18 anliegt. Das Luftleitelement 30 und die Schalen 38 können seitlich über Scheiben oder Arme miteinander verbunden sein. Auch Kreissegmente können sich an einer oder beiden Seiten erstrecken und die Schalen 38 mit dem Luftleitelement 30 verbinden. In weiteren Ausführungsformen ist keine gesonderte Lagerachse oder Lagerstelle für das Luftleitelement 30 und die Schalen 38 erforderlich, da durch die Form der Schalen 38 automatisch auch eine Lagerung innerhalb des Abschnitts 18 bereitgestellt wird.

Im Gehäuse 12 ist zusätzlich ein Steg 26 angeordnet, der fest mit den gegenüberliegenden Seitenwänden des Gehäuses im Abschnitt 18 verbunden ist. Der Steg 26 wird nicht verdreht und teilt die Lufteintrittsöffnung 14 in einen oberen Teilluftkanal und einen unteren Teilluftkanal. Einströmende Luft wird über den Steg 26 nach oben und unten geleitet.

Fig. 1 zeigt eine Neutralstellung, wobei die Luft, wie schematisch über die gestrichelten Pfeile gezeigt, in beide Teilluftkanäle zu gleichen Anteilen gelangt. Über die Ausbildung der Wände des Gehäuses 12 im Abschnitt 18 erfolgt eine Luftablenkung, wobei in der Neutralstellung ausströmende Luft im Wesentlichen geradlinig ausgegeben wird. Zum einen treffen die beiden Luftströme über die Teilluftkanäle aufeinander, wobei sich die Luftablenkung aufhebt und zum anderen unterstützt die Luftleitfläche des Griffs 32 die geradlinige Luftablenkung.

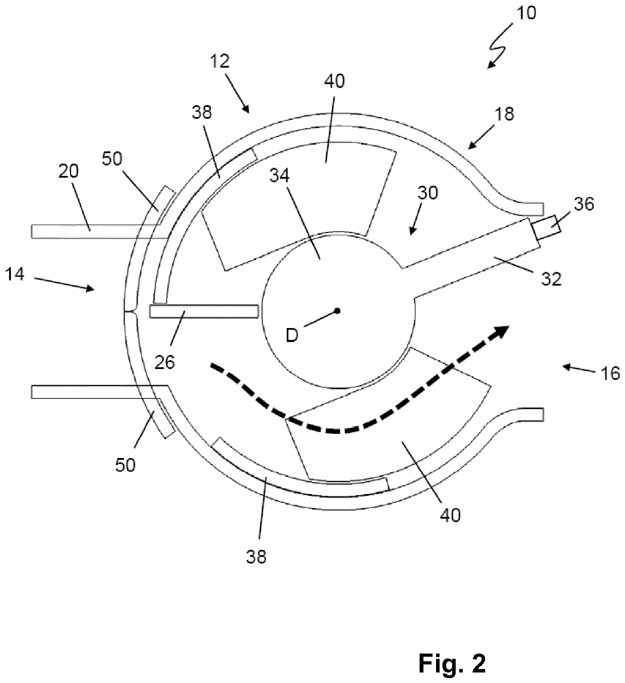

Fig. 2 zeigt eine schematische Darstellung des Luftausströmers von Fig. 1 mit einem verschwenkten Luftleitelement 30 und damit verschwenkten Schalen 38, wobei eine maximale Luftablenkung nach oben gezeigt ist. Fig. 2 zeigt zusätzlich einen Zustand, wobei die Drosselklappen 50 vollständig aufeinander zu bewegt sind und damit keine Luftzufuhr erfolgt. Daher ist der in Fig. 2 gezeigte Zustand in der Praxis selten anzutreffen. Die Darstellung von Fig. 2 zeigt schematisch zwei Zustände und verdeutlicht das Wirkprinzip des Luftausströmers 10. Zum einen wird über die Drosselklappen 50 beim Schließen der Lufteintrittsöffnung 14 keine Luftablenkung erreicht, da diese aufeinander zu bewegt werden und damit einströmende Luft im mittigen Bereich des Abschnitts 18 eintritt. Zudem zeigt Fig. 2 die Ablenkung der Luft durch ein Verschwenken des Luftleitelementes 30. Hierzu wird das Luftleitelement 30 über das Bedienelement 36 oder den Griff 32 um die Drehachse D verschwenkt. In der maximalen Luftablenkung nach oben ist durch das Verschwenken des Luftleitelementes 30 die obere Schale 38 so weit verschwenkt worden, dass diese an dem Steg 26 anliegt. Auch ohne die Drosselklappen 50 wäre daher der obere Teilluftkanal versperrt und einströmende Luft gelangt vollständig in den unteren Luftkanal. Aufgrund der gekrümmten Ausbildung des Abschnitts 18 ergibt sich dabei eine Ablenkung des Luftstroms nach oben. Zusätzlich befindet sich die untere Gruppe von Lamellen 40 im Wesentlichen im Bereich der Luftaustrittsöffnung 16, sodass eine seitliche Luftablenkung über die Lamellen 40 eine starke Ablenkung hervorruft.

Die Anordnung der Lamellen 40 im Bereich des walzenförmigen Abschnitts 34 erlaubt eine verbesserte seitliche Luftablenkung, insbesondere da die seitliche Luftablenkung in einem der Luftaustrittsöffnung 16 zugewandten Abschnitt erfolgt. Die Ausbildung der Form der Lamellen 40 kann die seitliche Luftablenkung weiter unterstützen.

Bei einem entsprechenden Verschwenken des Luftleitelementes 30 nach unten wird über die untere Schale 38 der untere Teilluftkanal entsprechend versperrt. Zudem sind Zwischenstellungen möglich, wobei der obere oder der untere Teilluftkanal entsprechend nur teilweise versperrt werden und der Luftstrom hierüber reduziert wird. Entsprechend ist dann der Luftstrom über den anderen Teilluftkanal größer, sodass die Luftablenkung nach oben und unten entsprechend dem Volumenstromverhältnis in den beiden Teilluftkanälen erfolgt.

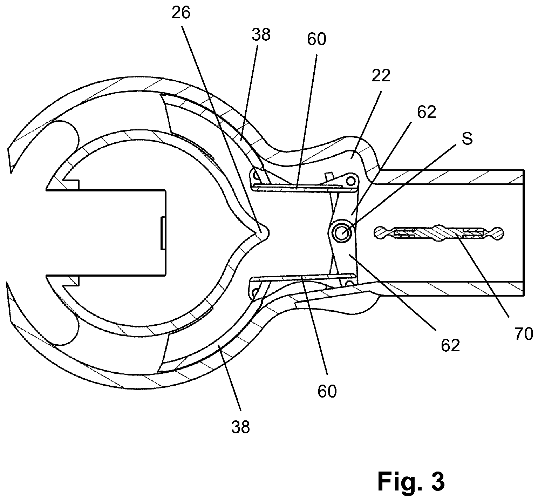

Fig. 3 zeigt eine schematische Darstellung eines Luftausströmers 10 einer weiteren Ausführungsform in einer Neutralstellung mit einer Klappenanordnung zur Luftablenkung. Anstelle zweier Drosselklappen 50 weist der Luftausströmer 10 in einem zweiten Kanalabschnitt eine Schließklappe 70 auf, die verschwenkbar gelagert ist. In dieser Ausführungsform sind an den gegenüberliegenden Kanten der Schalen 38 Klappen 60 verschwenkbar gelagert, die über Hebel 62 am Gehäuse gelagert sind. Die Hebel 62 sind um eine Schwenkachse S drehbar am Gehäuse gelagert. Zwischen dem Abschnitt 18 und dem zweiten Kanalabschnitt ist ein erster Kanalabschnitt 22 ausgebildet, wobei im ersten Kanalabschnitt 22 der Abstand der Kanalwände deutlich größer ist als im zweiten Kanalabschnitt. Der Abstand der Klappen 60 ist in der Neutralstellung im Wesentlichen genauso groß wie der Abstand der gegenüberliegenden Kanalwände im zweiten Kanalabschnitt. Die Klappen 60 dienen in erster Linie dazu, im verschwenkten Zustand der Schalen 38 ein Anprallen der Luft auf die Schalen 38 und damit eine zusätzliche Turbolenz und Verwirbelung zu verhindern. Durch die Ausbildung des größeren Abstands der Wandelemente im ersten Kanalabschnitt 22 werden Aufnahmen für die Klappen 60 bereitgestellt. Die Aufnahmen dienen zum Ausgleich der Schwenkbewegung in den verschiedenen Stellungen der Schalen 38 und der damit verschwenkbar verbundenen Klappen 60.

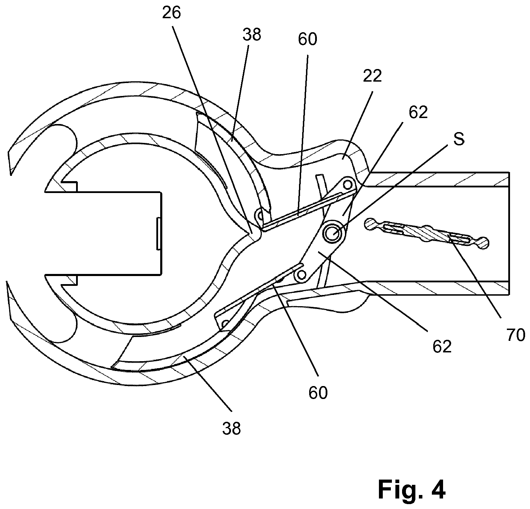

Fig. 4 zeigt eine schematische Darstellung des Luftausströmers 10 von Fig. 3 in einer ersten maximalen Stellung, wobei die untere Klappe 60 an dem unteren Wandabschnitt des ersten Kanalabschnitts 22 anliegt. Die Klappen 60 sind zudem gekrümmt ausgebildet, sodass einströmende Luft entlang der Klappen 60 geleitet wird. Die Klappen 60 weisen hierzu eine strömungsgünstige Form auf. Wie in Fig. 4 gezeigt, gelangt die Luft an die obere Klappe 60 und wird über die Klappe 60 in den unteren Teilluftkanal geführt. Ein Anprallen und damit eine zusätzliche Verwirbelung wie in der ersten Ausführungsform wird verhindert. Die obere Klappe 60 dient in dieser Ausführung als Verlängerung des Stegs 26. Die Ausbildung der Aufnahmen im ersten Kanalabschnitt 22 ermöglicht eine Anlage der Klappen 60 in den entsprechenden Stellungen.

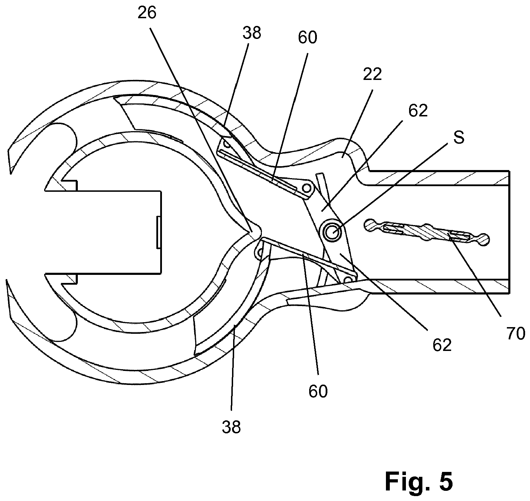

Fig. 5 zeigt eine weitere schematische Darstellung des Luftausströmers 10 von Fig. 3 in einer zweiten Maximalstellung, wobei einströmende Luft in den oberen Teilluftkanal geleitet wird.

Die Ausbildung der Klappenanordnung mit den Klappen 60 und die entsprechende Ausbildung des Luftkanals 20 mit dem ersten Kanalabschnitt 22 und dem zweiten Kanalabschnitt stellt eine strömungsgünstige Luftzuführung in die entsprechenden Teilluftkanäle bereit. Eine Verwirbelung der einströmenden Luft wird verhindert. Störende Geräusche durch die Verwirbelung werden ausgeschlossen. Das Strömungsverhalten insbesondere im Bereich der Luftaustrittsöffnung 16 wird über die Klappenanordnung verbessert.

Die in den Figuren 1 - 5 gezeigten Luftausströmer 10 weisen eine intuitive Bedienung auf, da ein Verschwenken des Luftleitelementes 30 nach oben und unten eine entsprechende Luftablenkung bewirken. Zudem sind die Luftausströmer 10 einfach ausgebildet. Die Schalen 38 und die Klappen 60 sind in der zweiten Ausführungsform verschwenkbar miteinander verbunden und weisen im Wesentlichen die gleiche Breite auf, wie das Luftleitelement 30. Insbesondere die Klappen 60 sind als Ablenkflächen so ausgebildet und weisen eine Krümmung auf, dass eine Luftablenkung in die entsprechenden Bereiche erfolgt und Verwirbelungen reduziert werden. In der ersten Ausführungsform erstrecken sich die Schalen 38 ebenfalls über die Breite des Luftleitelements 30.

Auch in den Zwischenstellungen der Schalen 38 nehmen die Klappen 60 Zwischenstellungen ein und unterstützen die Luftzufuhr in die entsprechenden Teilluftkanäle.

### Bezugszeichenliste

- 10: Luftausströmer
- 12: Gehäuse
- 14: Lufteintrittsöffnung
- 16: Luftaustrittsöffnung
- 18: Abschnitt
- 20: Luftkanal
- 22: erster Kanalabschnitt
- 26: Steg
- 30: Luftleitelement
- 32: Griff
- 34: walzenförmiger Abschnitt
- 36: Bedienelement
- 38: Schale
- 40: Lamellen
- 50: Drosselklappe
- 60: Klappe
- 62: Hebel
- 70: Schließklappe

- D: Drehachse
- S: Schwenkachse

## Patentansprüche

1. Luftausströmer aufweisend
- ein Gehäuse (12) mit einem Abschnitt (18), der eine Lufteintrittsöffnung (14) und eine Luftaustrittsöffnung (16) aufweist,
- ein im Gehäuse (12) drehbar gelagertes Luftleitelement (30) ,
- eine erste Gruppe von Lamellen (40) und eine zweite Gruppe von Lamellen (40), wobei
- die Lamellen (40) der ersten Gruppe von Lamellen (40) und die Lamellen (40) der zweiten Gruppe von Lamellen (40) gegenüberliegend und verschwenkbar am Luftleitelement (30) gelagert sind,
- das Luftleitelement (30) mit zwei konkav gekrümmten Schalen (38) verbunden ist,
- die Schalen (38) und das Luftleitelement (30) gemeinsam innerhalb des Abschnitts (18) des Gehäuses (12) drehbar gelagert sind, und
- in dem Abschnitt (18) des Gehäuses (12) ein dem Luftleitelement (30) in Luftströmungsrichtung vorgelagerter Steg (26) angeordnet ist, der mit dem Gehäuse (12) verbunden ist und sich vom Luftleitelement (30) in Richtung der Lufteintrittsöffnung (14) erstreckt und in den Schwenkweg der Schalen (38) ragt,
**dadurch gekennzeichnet, dass**
- der Abschnitt (18) der Mantelfläche eines Zylinders entspricht,
- die Schalen (38) die Form von Segmenten aus der Mantelfläche eines Zylinders aufweisen, der Steg (26) fest mit gegenüberliegenden Seitenwänden des Gehäuses (12) im Abschnitt (18) erbunden ist und die Lufteintrittsöffnung (14) in einen oberen Teilluftkanal und einen unteren Teilluftkanal teilt, sodass einströmende Luft über den Steg (26) nach oben und unten geleitet werden kann,
- in einer Neutralstellung des Luftausströmers die einströmende Luft in beide Teilluftkanäle zu gleichen Anteilen gelangen kann, und
- jede Schale (38) so weit verschwenkt werden kann, dass diese an dem Steg (26) anliegen kann, sodass ein Teilluftkanal versperrt werden und die einströmende Luft vollständig in den anderen Teilluftkanal gelangen kann.

2. Luftausströmer nach Anspruch 1, wobei der Steg (26) die Lufteintrittsöffnung (14) im Wesentlichen mittig teilt.

3. Luftausströmer nach Anspruch 1 oder 2, wobei der Abstand der Schalen (38) zueinander gleich oder geringfügig größer ist als der Öffnungsquerschnitt der Lufteintrittsöffnung (14) und/oder die Bogenlänge jeder Schale (38) mindestens so groß ist, wie der halbe Öffnungsquerschnitt der Lufteintrittsöffnung (14).

4. Luftausströmer nach einem der Ansprüche 1 bis 3, wobei das Luftleitelement (30) keulenförmig oder walzenförmig ausgebildet ist.

5. Luftausströmer nach einem der Ansprüche 1 bis 4, wobei das Luftleitelement (30) einen über die Luftaustrittsöffnung (16) zugänglichen Griff (32) aufweist und am Griff(32) ein Bedienelement (36) angeordnet ist, welches mit den Lamellen (40) der ersten Gruppe von Lamellen (40) und den Lamellen (40) der zweiten Gruppe von Lamellen (40) zum Verschwenken gekoppelt ist.

6. Luftausströmer nach Anspruch 5, wobei sich der Griff (32) über die Länge des Luftleitelements (30) hinweg erstreckt und als Luftleitfläche ausgebildet ist.

7. Luftausströmer nach einem der Ansprüche 1 bis 6, wobei im Bereich der Lufteintrittsöffnung (14) des Gehäuses (12) oder in einem der Lufteintrittsöffnung (14) in Luftströmungsrichtung vorgelagerten Kanal (20) eine Drosseleinrichtung angeordnet ist, mittels welcher die Menge an zugeführter Luft regelbar ist.

8. Luftausströmer nach Anspruch 7, wobei die Drosseleinrichtung zwei verschwenkbare Drosselklappen (50) aufweist, die zum Verschließen der Lufteintrittsöffnung (14) bis in Berührungsanlage gegeneinander bewegbar und die zum Öffnen der Lufteintrittsöffnung (14) voneinander wegbewegbar sind.

9. Luftausströmer nach einem der Ansprüche 1 bis 7, wobei die Schalen (38) an den gegenüberliegenden Längskanten jeweils schwenkbeweglich mit einer Klappe (60) verbunden und die Klappen (60) über eine drehbar gelagerte Hebelanordnung am Gehäuse (12) gelagert sind.

10. Luftausströmer nach Anspruch 9, wobei das Gehäuse (12) im Bereich der Klappen (60) einen an die Lufteintrittsöffnung (14) sich anschließenden ersten Kanalabschnitt (22) aufweist, der Aufnahmen für die Klappen (60) ausbildet, wobei sich in Luftströmungsrichtung vorgelagert ein zweiter Kanalabschnitt anschließt, dessen Öffnungsquerschnitt kleiner ist als der Öffnungsquerschnitt im ersten Kanalabschnitt (22).

## Claims

1. Air vent comprising
- a housing (12) with a section (18) having an inlet opening (14) and an air outlet opening (16),
- an air guide element (30) rotatably mounted in the housing (12),
- a first group of slats (40) and a second group of slats (40),
wherein
- the slats (40) of the first group of slats (40) and the slats (40) of the second group of slats (40) are pivotably mounted on the air guide element (30) to be mutually opposite,
- the air guide element (30) is connected with two concavely curved shells (38),
- the shells (38) and the air guide element (30) are rotatably mounted in common within the section (18) of the housing (12) and
- arranged in the section (18) of the housing (12) is a web (26) which is upstream of the air guide element (30) in air flow direction and connected with the housing (12) and which extends from the air guide element (30) in the direction of the air inlet opening (14) and projects into the pivot path of the shells (38),
**characterised in that**
- the section (18) corresponds with the circumferential surface of a cylinder,
- the shells (38) have the shape of segments of the circumferential surface of a cylinder, the web (26) is fixedly connected with opposite side walls of the housing (12) in the section (18), and the air inlet opening (14) divides into an upper air sub-channel and a lower air sub-channel so that inflowing air can be guided upwardly and downwardly by way of the web (26),
- in a neutral setting of the air vent the inflowing air can pass in equal proportions to the two air sub-channels and
- each shell (38) can be pivoted to such an extent that this can bear against the web (26) so that one air sub-channel can be blocked and the inflowing air can pass entirely to the other air sub-channel.

2. Air vent according to claim 1, wherein the web (26) divides the air inlet opening (14) substantially centrally.

3. Air vent according to claim 1 or 2, wherein the spacing of the shells (38) from one another is the same as or slightly larger than the opening cross-section of the air inlet opening (14) and/or the curve length of each shell (38) is at least as large as half the opening cross-section of the air inlet opening (14).

4. Air vent according to any one of claims 1 to 3, wherein the air guide element (30) is formed to be lobe-shaped or roller-shaped.

5. Air vent according to any one of claims 1 to 4, wherein the air guide element (30) has a handle (32) accessible by way of the air outlet opening (16) and an operating element (36), which is coupled with the slats (40) of the first group of slats (40) and the slats (40) of the second group of slats (40) for pivotation, is arranged at the handle (32).

6. Air vent according to claim 5, wherein the handle (32) extends over the length of the air guide element (30) and is formed as an air guide surface.

7. Air vent according to any one of claims 1 to 6, wherein a throttle device by means of which the amount of supplied air can be regulated is arranged in the region of the air inlet opening (14) of the housing (12) or in a channel (20) upstream of the air inlet opening (14) in air flow direction.

8. Air vent according to claim 7, wherein the throttle device comprises two pivotable throttle flaps (50) which for closing the air inlet opening (14) are movable towards one another until in contact and which for opening the air inlet opening (14) are movable away from one another.

9. Air vent according to any one of claims 1 to 7, wherein the shells (38) are connected at the opposite longitudinal edges respectively with a flap (60) to be pivotably movable and the flaps (60) are mounted on the housing (12) by way of a rotatably mounted lever arrangement.

10. Air vent according to claim 9, wherein the housing (12) has in the region of the flaps (60) a first channel section (22) which is connected with the air inlet opening (14) and forms the mounts for the flaps (60), wherein a second channel section having an opening cross-section smaller than the opening cross-section in the first channel section (22) adjoins upstream in air flow direction.

## Revendications

1. Dispositif d'écoulement d'air présentant
- un boîtier (12) avec une section (18) qui présente une ouverture d'entrée d'air (14) et une ouverture de sortie d'air (16),
- un élément de conduite d'air (30) logé de manière à pouvoir tourner dans le boîtier (12),
- un premier groupe de lamelles (40) et un second groupe de lamelles (40),
dans lequel
- les lamelles (40) du premier groupe de lamelles (40) et les lamelles (40) du second groupe de lamelles (40) sont logées à l'opposé et de manière pivotante au niveau de l'élément de conduite d'air (30),
- l'élément de conduite d'air (30) est relié à deux coques (38) courbées de manière concave,
- les coques (38) et l'élément de conduite d'air (30) sont logés de manière à pouvoir tourner ensemble à l'intérieur de la section (18) du boîtier (12), et
- une nervure (26) est agencée dans la section (18) du boîtier (12) en amont de l'élément de conduite d'air (30) dans le sens d'écoulement d'air, ladite nervure étant reliée au boîtier (12) et s'étendant de l'élément de conduite d'air (30) en direction de l'ouverture d'entrée d'air (14) et dépassant dans la voie de pivotement des coques (38),
**caractérisé en ce que**
- la section (18) correspond à la surface enveloppe d'un cylindre,
- les coques (38) présentent la forme de segments de la surface enveloppe d'un cylindre,
la nervure (26) est fixement reliée à des parois latérales opposées du boîtier (12) dans la section (18) et l'ouverture d'entrée d'air (14) se sépare en un canal d'air partiel supérieur et un canal d'air partiel inférieur de sorte que de l'air affluant puisse être conduit vers le haut et le bas par la nervure (26),
- l'air affluant peut parvenir dans une position neutre du dispositif d'écoulement d'air dans les deux canaux d'air partiels dans les mêmes proportions, et
- chaque coque (38) peut être pivotée si loin que celle-ci puisse reposer contre la nervure (26) de sorte qu'un canal d'air partiel soit bloqué et que l'air affluant puisse parvenir complètement dans l'autre canal d'air partiel.

2. Dispositif d'écoulement d'air selon la revendication 1, dans lequel la nervure (26) sépare sensiblement au milieu l'ouverture d'entrée d'air (14).

3. Dispositif d'écoulement d'air selon la revendication 1 ou 2, dans lequel la distance des coques (38) les unes par rapport aux autres est identique ou légèrement supérieure à la section transversale d'ouverture de l'ouverture d'entrée d'air (14) et/ou la longueur d'arc de chaque coque (38) est au moins aussi grande que la demi-section transversale d'ouverture de l'ouverture d'entrée d'air (14).

4. Dispositif d'écoulement d'air selon l'une des revendications 1 à 3, dans lequel l'élément de conduite d'air (30) est réalisé en forme de lobe ou en forme de rouleau.

5. Dispositif d'écoulement d'air selon l'une des revendications 1 à 4, dans lequel l'élément de conduite d'air (30) présente une poignée (32) accessible par l'ouverture de sortie d'air (16) et un élément de commande (36) est agencé au niveau de la poignée (32), lequel est couplé aux lamelles (40) du premier groupe de lamelles (40) et aux lamelles (40) du second groupe de lamelles (40) pour le pivotement.

6. Dispositif d'écoulement d'air selon la revendication 5, dans lequel la poignée (32) s'étend au-delà de la longueur de l'élément de conduite d'air (30) et est réalisée comme surface de conduite d'air.

7. Dispositif d'écoulement d'air selon l'une des revendications 1 à 6, dans lequel un dispositif d'étranglement est agencé dans la zone de l'ouverture d'entrée d'air (14) du boîtier (12) ou dans un canal (20) logé en amont de l'ouverture d'entrée d'air (14) dans le sens d'écoulement d'air, au moyen duquel la quantité d'air amené est réglable.

8. Dispositif d'écoulement d'air selon la revendication 7, dans lequel le dispositif d'étranglement présente deux clapets d'étranglement (50) pivotants qui sont mobiles pour la fermeture de l'ouverture d'entrée d'air (14) jusqu'en position de contact l'un contre l'autre et qui sont mobiles loin l'un de l'autre pour l'ouverture de l'ouverture d'entrée d'air (14).

9. Dispositif d'écoulement d'air selon l'une des revendications 1 à 7, dans lequel les coques (38) sont reliées au niveau des arêtes longitudinales opposées respectivement de manière mobile en pivotement à un clapet (60) et les clapets (60) sont logés par un agencement de levier logé de manière à pouvoir tourner au niveau du boîtier (12).

10. Dispositif d'écoulement d'air selon la revendication 9, dans lequel le boîtier (12) dans la zone des clapets (60) présente une première section de canal (22) se raccordant à l'ouverture d'entrée d'air (14) qui réalise des logements pour les clapets (60), dans lequel une seconde section de canal se raccorde en étant logée en amont dans le sens d'écoulement d'air, dont la section transversale d'ouverture est inférieure à la section transversale d'ouverture dans la première section de canal (22).
